(19) Europäisches Patentamt
European Patent Office
Office européen des brevets

(11) EP 0 930 344 A2

(12) # EUROPÄISCHE PATENTANMELDUNG

(43) Veröffentlichungstag:
**21.07.1999 Patentblatt 1999/29**

(51) Int. Cl.[6]: **C08L 101/14**, C08L 101/06

(21) Anmeldenummer: **98123624.3**

(22) Anmeldetag: **10.12.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **14.01.1998 DE 19801039**
**05.03.1998 DE 19809347**

(71) Anmelder:
**HÜLS AKTIENGESELLSCHAFT**
**45764 Marl (DE)**

(72) Erfinder: **Anders, Christine Dr.**
**45721 Haltern (DE)**

(74) Vertreter: **Olbricht, Gerhard Dr.**
**Degussa-Hüls Aktiengesellschaft**
**Patente - Marken**
**Bau 1042 - PB 15**
**45764 Marl (DE)**

(54) **Hämokompatible und bakterienabweisende hydrophile Copolymere**

(57) Die Erfindung betrifft ein hämokompatibles und bakterienabweisendes hydrophiles, quellfähiges Copolymer mit Repetiereinheiten aus mindestens einem Sulfatund/oder Sulfonatgruppen-haltigen Monomer (A), mindestens einem Carboxyl- und/oder Carboxylatgruppen-haltigen Monomer (B) sowie mindestens einem mindestens bifunktionellen Vernetzer (C). Die Copolymere eignen sich zur Verwendung für hygienische oder medizinische Zwecke.

EP 0 930 344 A2

## Beschreibung

Die Erfindung betrifft hämokompatible (oder hämophile) und bakterienabweisende, gegebenenfalls zellproliferationshemmende oder zellproliferationsfördernde hydrophile Copolymere, die quellfähig sind und in wäßrigem Medium Hydrogele bilden. Die Erfindung betrifft weiterhin ein Verfahren zur Herstellung der Copolymeren sowie deren Verwendung.

Quellfähige, d.h. Wasser aufnehmende Polymere oder Copolymere haben vielfältige Verwendung gefunden. Als Beispiele seien die sogenannten Superabsorber für Babywindeln genannt. Für diesen Zweck werder die Polymeren häufig mit allerlei Hilfs- und Zusatzstoffen versehen, die u.a. die Hautverträglichkeit erhöhen sollen. Andere Erzeugnisse, für die quellfähige Polymere benötigt werden, sind z.B. Wundverbände, Damenbinden und Tampons sowie Kompressen.

## 1. Zeichnungen

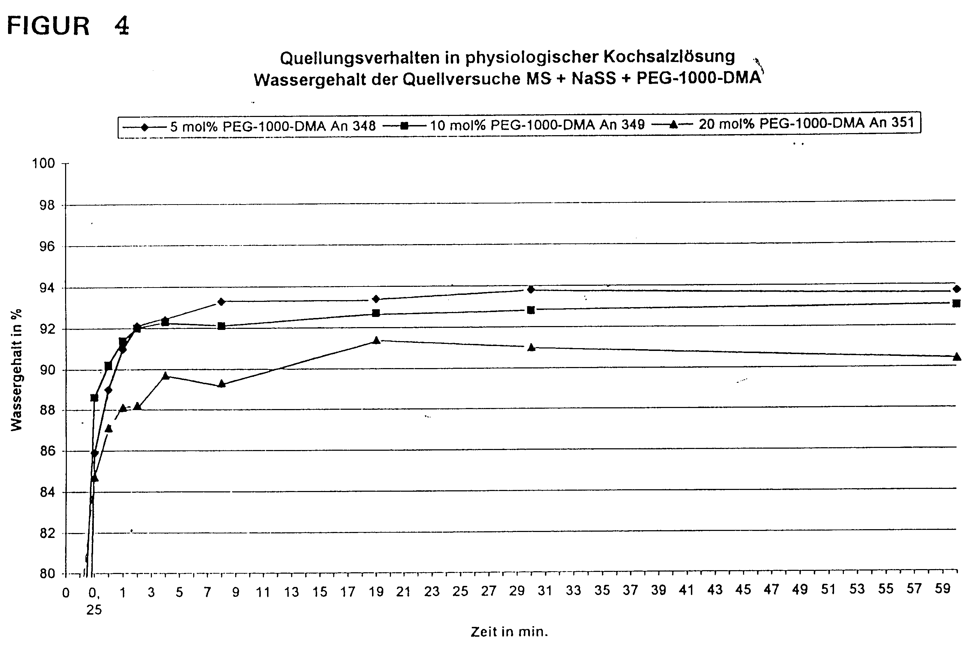

Die Figuren 1 bis 4 geben die Ergebnisse von Quellversuchen mit verschiedenen queilfähigen Copolymeren nach der Erfindung mit unterschiedlichen Gehalten an Vernetzer in Wasser bzw. in physiologischer Kochsalzlösung wieder.

## 2. Kurzbeschreibung der Erfindung

Ein wesentlicher Gegenstand der Erfindung ist ein hämokompatibles und bakterienabweisendes hydrophiles, quellfähiges Copolymer mit Repetiereinheiten aus mindestens einem Sulfat- und/oder Sulfonatgruppen-haltigen Monomer (A), mindestens einem Carboxyl- und/oder Carboxylatgruppen-haltigen Monomer (B) sowie mindestens einem mindestens bifunktionellen Vernetzer (C).

Andere Gegenstände der Erfindung sind ein Verfahren zur Herstellung der Copolymeren sowie die Verwendung der Copolymeren.

Hydrophil und quellfähig ist ein Copolymer im Sinne der Erfindung dann, wenn die Wasseraufnahme nach dem in der Folge beschriebenen Test mindestens 80 % beträgt. Die erfindungsgemäßen Copolymeren können bis zum 100-fachen ihres Gewichtes an Wasser aufnehmen. Die Wasseraufnahme ist reversibel, wenn es auch für viele praktische Verwendungen auf Reversibilität nicht ankommt. Die Copolymeren sind ausgeprägt hämokompatibel, verlängern also die Blutgerinnungszeit erheblich. Diese Wirkung ist ebenso nachhaltig wie der starke bakterienabweisende Effekt. Die besonderen Bedingungen, unter denen ein Copolymer zudem zellproliferationshemmend oder zellproliferationsfördernd ist, werden in der Folge erläutert. Diese Kombination vorteilhafter Eigenschaften, welche die erfindungsgemäßen Copolymeren zeigen, ist mit guter Haut- und Gewebeverträglichkeit verbunden, so daß sich die erfindungsgemäBen Copolymeren besonders für medizinische Verwendungen eignen.

## 3. Detaillierte Beschreibung der Erfindung

Die genannten Repetiereinheiten der Copolymeren können direkt aus den genannten Monomeren A und B bzw. aus dem Vernetzer C entstanden sein. Alternativ können aber auch Derivate dieser Ausgangsstoffe eingesetzt werden, die nach der Polymerisation in die genannten Repetiereinheiten umgewandelt werden. Zum Beispiel konnen Sulfonsäure- und/oder Carboxylgruppen durch Neutralisation nachträglich in Sulfonat- und/oder Carboxylatgruppen umgewandelt werden. Weiterhin kann man z.B. Carbonamid- oder Nitrilgruppen sowie Carbonester- oder Sulfonsäureestergruppen durch Hydrolyse und gegebenenfalls Neutralisation in Carboxylat- bzw. Sulfonatgruppen umwandeln.

Natürlich können statt eines einzigen Monomers A bzw. eines einzigen Monomers B auch Mischungen von verschiedenen Monomere A bzw. verschiedenen Monomere B eingesetzt werden. Die obigen Erläuterung über Gruppen, die in die genannten, physiologisch relevanten Gruppen umgewandelt werden können, gelten entsprechend.

Anstelle von zwei Monomeren A und B kann man auch nur ein Monomer (A+B) einsetzen, das die genannten, physiologisch relevanten Gruppen (oder Gruppen, die in diese Gruppen überführbar sind) in demselben Molekül enthält.

### 3.1 Monomere A und B

Die Monomeren A steuern die für die hämokompatiblen und bakterienabweisenden Eigenschaften der erfindungsgemäßen Copolymeren wesentlichen Sulfat- und/oder Sulfonatgruppen bei. Sie sind überwiegend bekannte Stoffe und gut zugänglich. Sie sind radikalisch polymerisierbar und enthalten eine oder gegebenenfalls zwei ethylenische Doppelbindungen und eine oder gegebenenfalls zwei Sulfat- und/oder Sulfonatgruppen mit einem Alkalimetallion, insbesondere einem Natriumion als Gegenion. Die Monomeren B sind ebenfalls überwiegend bekannte und gut

zugängliche Stoffe. Sie liefern die für die genannten Wirkungen ebenfalls erforderlichen Carboxyl- und/oder Carboxylatgruppen, letztere wiederum mit einem Alkalimetallion, insbesondere einem Natriumion als Gegenion.

Geeignete Monomere A und B werden durch die allgemeinen Formeln I und II beschrieben:

Formel I: $(C_nH_{2n-q-x})(SO_3R^a)_x$ (Monomere A)

Formel II: $(C_nH_{2n-q-x})(COOR^b)_x$ (Monomere B)

In den Formeln steht

- n jeweils unabhängig für eine ganze Zahl von 2 bis einschließlich 6;
- x jeweils unabhängig für 1 oder 2;
- g jeweils unabhängig für 0 oder 2; bedeutet der Rest
- $R^a$ ein Äquivalent eines Metallions, insbesondere ein Alkalimetallion und
- $R^b$ -H oder ein Äquivalent eines Metallions, insbesondere ein Alkalimetallion.

Den gegebenen Definitionen entsprechend bedeutet der Rest $(C_nH_{2n-q-x})$- jeweils unabhängig einen geradkettigen oder verzweigten einwertigen Alkenylrest (q=0, x=1) oder Alkadienylrest (q=2, x=1) oder einen zweiwertigen Alkenylenrest (q=0, x=2) oder Alkadienylenrest (q=2, x=2).

Auch vom Benzol abgeleitete Monomere A und B der allgemeinen Formel

Formel III: $(C_6H_{6-b-c-d})B_bR^c{}_c(OH)_d$ (Monomere A oder B)

können eingesetzt werden, worin

- B jeweils unabhängig einen ein- oder zweifach ungesättigten geradkettigen oder verzweigten Rest der Formeln $(C_nH_{2n-1-q-y})(SO_3R^a)_y$ oder $(C_nH_{2n-1-q-y})(COOR^b)_y$ bedeutet, wobei $R^a$, $R^b$, n und q wie zuvor definiert sind und y jeweils unabhängig für 0, 1 oder 2 steht;
- $R^c$ jeweils unabhängig $C_{1-4}$-Alkyl. $-NH_2$, -COOH, $-SO_3H$, $-OSO_3H$, $-CPO(OH)_2$, $-PD(OH)_2$, $-OP(OH)_2$, $-OPO(O^-)OCH_2-CH_2-N^+(CH_3)_3$, $-PO(O^-)O-CH_2-CH_2-N^+(CH_3)_3$, $-OP(O^-)OCH_2-CH_2-N^+(CH_3)_3$ oder ein Salz, insbesondere ein Alkalisalz, oder einen Ester der genannten Gruppen bedeutet:
- b für 1, 2, oder 3 steht;
- c für 0, 1, 2, oder 3 steht; und
- d für 0, 1, 2, oder 3 steht;

mit der Maßgabe, daß b + c + d $\leq$ 6, vorteilhaft $\leq$4 ist.

Andere geeignete Monomere A sind Sulfate der Formel IV

Formel IV: $(C_nH_{2n-q-x})(OSO_3R^a)_x$ (Monomere A)

wobei $R^a$, n, q und x wie zuvor definiert sind.

Geeignete Monomere A sind z.B. Natriumallylsulfat, Natriumallylsulfonat, Natriummethallylsulfat, Natriumvinyltoluolsulfonat; Carboxylvinylbenzolsulfonat, Natriumvinylsulfonat, Natrium-2-, -3- oder -4-vinylbenzolsulfonat, Natriumallylsulfat, Natriummethallylsulfat, Natrium-1-buten-4-sulfat und Natrium-1-buten-2-sulfat. Von den geeigneten Monomeren B seien beispielsweise genannt: Acrylsäure, 4-Vinylsalicylsäure, Itaconsäure, Vinylessigsäure, Zimtsäure, 4-Vinylbenzoesäure, 2-Vinylbenzoesäure, Sorbinsäure, Kaffeesäure, Maleinsäure, Methylmaleinsäure, Crotonsäure, Isocrotonsäure, Fumarsäure, Dimethylfumarsäure, Methylfumarsäure, Dihydroxymaleinsäure, Allylessigsäure sowie die Natriumsalze dieser Säuren. Ein Monomer (A+B), das Sulfonat- und Carboxylatgruppen in sich vereinigt, ist z.B. Dinatrium-3-carboxylat-4-vinylbenzolsulfonat.

In den erfindungsgemäßen Polymeren, die sich von Monomeren A und B gemäß den allgemeinen Formeln I bis IV ableiten, kann das molare Verhältnis von Carboxyl- und/oder Carboxylatgruppen zu Sulfat und/oder Sulfonatgruppen in der Beschichtung in weiten Grenzen schwanken. Ausgeprägte bakterienabweisende Eigenschaften zeigen Gele, in denen dieses Verhältnis zwischen 0,2 und 10 liegt. Bakterienabweisende und zugleich zellproliferationsinhibierende Eigenschaften werden erzielt, wenn das Verhältnis 0,2 bis 3, vorteilhaft 0,4 bis 3 und insbesondere 0,4 bis 2

beträgt. Die beschichteten Oberflächen zeigen in bemerkenswerter Weise bakterienabweisende, aber zellproliferationsfördernde Eigenschaften, wenn das besagte molare Verhältnis 2 bis 10, vorteilhaft 3 bis 10 und insbesondere 3 bis 5 beträgt. Als zellproliferationsfördernd im Sinne der Erfindung gilt eine Beschichtung dann, wenn die Haftung und Vermehrung von Säugetierzellen durch die Beschichtung im Vergleich zu der unbeschichteten Oberfläche verbessert oder jedenfalls weniger stark beeinträchtigt wird als die Haftung und Vermehrung von Bakterien.

### 3.2 Vernetzer C

Bevorzugte mindestens bifunktionelle Vernetzer C sind wie die Monomeren A and B radikalisch polymerisierbar und enthalten zwei bis vier olefinische Doppelbindungen. Vernetzer mit zwei olefinischen Doppelbindungen ergeben zweidimensionale Netzwerke, während höherfunktionelle Vernetzer zu dreidimensionalen Netzwerken führen die weniger quellfähig sind und wasserärmere Hydrogele bilden. Höherfunktionelle Vernetzer werden daher zweckmäßig in geringeren molaren Mengen eingesetzt als die bifunktionellen Vernetzer, um den Vernetzungsgrad nicht zu hoch werden zu lassen (wodurch das Wasseraufnahmevermögen verringert würde). Natürlich kann man auch mit zwei oder mehr verschiedenen Vernetzern arbeite, z.B. mit einem bifunktionellen und einem trifunktionellen Vertreter. Wegen der angestrebten Quellbarkeit (oder des Wasseraufnahmevermögens) der erfindungsgemäßen Copolymere sollten die Vernetzer ihrerseits hydrophil sein, z.B. Polyalkylenoxidgruppen enthalten.

Geeignete Vernetzer sind z.B. Methylenbisacrylamid (MBAA), Ethylenglykoldimethacrylat (EGDMA), Diethylenglykoldimethacrylat, Ethylenglykoldiacrylat (EGDA), Diethylenglykoldiacrylat (DEGDA), Polyethylenglykol-1000-dimethacrylat. Diethylenglykoldivinylether (DEGDV), Polyethylenglykol-300-divinylether, Polyethylenglykol-1500-divinylether, Polyethylenglykol-6000-divinylether, Cyclohexan-1,4-dimethanoldivinylether, 1,6-Hexandioldivinylether, 1,6-Hexandioldimethacrylat, Allylcinnamat, Glycerintrivinylether, Glycerin-12EO-trivinylether, Trimethylolpropantriacrylat, Trimethylolpropantrimethacrylat, Trimethylolpropantrivinylether, Pentarythrittetraacrylat und Pentarythrittriallylether.

Durch die Größe des molaren Anteils des Vernetzers C an der Summe der molaren Anteile der Monomeren A, B und gegebenenfalls D sowie des Vernetzers C wird der Vernetzungsgrad bestimmt. Wenn man einen bifunktionellen Vernetzer verwendet, beträgt dieser Anteil in der Regel 1 bis 40 mol-%. Liegt die (durchschnittliche) Funktionalität des Vernetzers höher, z.B. bei 3,5, so beträgt der Anteil des Vernetzers C zweckmäßig 0,01 bis 10 mol-%.

### 3.3 Weitere Monomere D

Die Copolymeren nach der Erfindung können ausschließlich Repetiereinheiten enthalten, die sich von den Monomeren A und B sowie dem Vernetzer C ableiten, oder weitere Repetiereinheiten enthalten, die von anderen Vinylmonomeren D stammen und die Eigenschaften der erfindungsgemäßen Copolymere in erwünschter Weise modifizieren. So können Repetiereinheiten vorhanden sein, die von hydrophilierenden Monomeren, wie 2-Hydroxyethylmethacrylat (HEMA), Diethylenglykolmonoacrylat, 1,4-Butandiolmonoacrylat oder vinylierten Monosacchariden, oder von anderen eigenschaftsmodifizierenden Monomeren stammen. Hydrophile Vinylmonomere D werden insbesondere dann mitverwendet, wenn die Monomeren A und B mit dem Vernetzer C ausnahmsweise ein Copolymer ergeben, das nicht hydrophil und quellfähig im Sinne der Erfindung ist. Wenn im Copolymer von Monomeren D stammende weiteren Repetiereinheiten vorhanden sind, beträgt deren Anteil in der Regel bis zu 40 Molprozent, insbesondere bis zu 30 Molprozent, bezogen auf auf die Summe der Repetiereinheiten, die von den Monomeren A, B und dem Vernetzer C stammen.

### 3.4 Herstellung der erfindungsgemäßen Copolymeren

Zur Herstellung der Copolymeren werden die Monomeren A und B sowie der Vernetzer C und gegebenenfalls weitere Monomere D in üblicher Weise in wäßrigem Medium radikalisch polymerisiert. Als Initiatoren verwendet man vorteilhaft die bekannten für wäßrige Systeme brauchbaren Peroxide, z.B. Persulfate, wie Kaliumperoxydisulfat; Perester; Hydroperoxide, wie tert. -Butylhydroperoxid; und Azoverbindungen, wie Azoisobutyronitril. Die Initiatoren werden zweckmäßig in Mengen von 0,01 bis 1 Mol-% eingesetzt, bezogen auf die molaren Mengen der Monomeren. Man kann alle Ausgangsstoffe auf einmal vorlegen oder beispielsweise zuerst die Monomeren A und B sowie gegebenenfalls D copolymerisieren und den Vernetzer C, gegebenenfalls mit weiterem Initiator, später zufügen. Die Polymerisation läuft im Temperaturbereich von 40 bis 100°C zügig ab. Das Reaktionsgemisch ist, je nach Vernetzungsgrad, eine mehr oder minder viskose, klare Lösung oder bereits ein Gel. Man kann das Copolymer isolieren, indem man das Reaktionsgemisch in ein mit Wasser mischbares Losemittel einträgt, in dem das Copolymer unlöslich ist, z.B. in Ethanol. Mit Ethanol kann man auch lösliche niedermolekulare Anteile, wie Monomere oder Initiatorbestandteile, aus dem abfiltrierten Copolymer auswaschen. Durch schonendes Trocknen, beispielsweise bei 60°C im Vakuum, kann man das weitgehend wasserfreie Produkt gewinnen.

Das erfindungsgemäße Copolymer ist ein Feststoff, der zuweilen klebrig ist, aber im Mörser zerkleinert werden

kann. Wasseraufnahme und Wasserabgabe sind reversibel, die Wasseraufnahme kann durch Differenzwägung bestimmt werden. Je nach Hydrophilie der Monomeren und des Vernetzers sowie dem Vernetzungsgrad kann das Copolymer bis zum 200-fachen seines Gewichtes an Wasser aufnehmen.

### 3.5 Verwendung der Copolymeren

Die erfindungsgemäßen Copolymeren sind für alle Zwecke verwendbar, bei denen es auf Blutverträglichkeit und/oder auf bakterienabweisende Eigenschaften ankommt. Beides ist bei medizinischen Affriendungen gefragt. Das Copolymer eignet sich z.B. für Kompressen und Wundverbände. Es saugt die aus der Wunde austretende wäßrige Flüssigkeit auf und wirkt gleichzeitig desinfizierend. Eine andere Verwendung ist die als Substrat für implantierte Wirkstoffdepots. Weiterhin kann das Hydrogel des Copolymers als Wasserreservoir für Pflanzen oder schnittblumen dienen, das wegen der bakterienabweisenden Wirkung zugleich die Haltbarkeit der Schnittblumen verbessert. Im hygienischen Bereich kann es für Damenbinden und Tampons verwendet werden.

Die folgenden Beispiele sollen die Erfindung näher erläutern, nicht aber ihren Anwendungsbereich begrenzen.

### 3.6 Beispiele 1 bis 15

Allgemeine Vorschrift

In einem 3-l Rundkolben werden 206 g (1 mol) Natrium-4-vinylbenzolsulfonat (Natriumstyrolsulfonat; NaSS), 116 g (1 mol) Maleinsäure (MS), 2 l Wasser und die in der Tabelle angegebenen Mengen Vernetzer vorgelegt. Man setzt jeweils 1 mol% (= 0.02 mol $K_2S_20_8$ zu und erhitzt das Gemisch unter Rühren auf 60°C. Die Polymerisation ist nach 4 h beendet, Man läßt auf Raumtemperatur abkühlen und trägt das Reaktionsgemisch in 10 l Ethanol ein. Das ausgefallene Copolymer wird abdekantiert und durch Erhitzen auf 60°C bis zur Gewichtskonstanz getrocknet.

Die Beispiele der folgenden Versuchsreihe zeigen Variationsmöglichkeiten für den Vernetzer unter im übrigen gleichen Bedingungen.

Tabelle

| Beispiel | Vernetzer | Verträglichkeit bei mol% Vernetzer |
|---|---|---|
| 1 | Methylenbisacrylamid (MBAA) | 1,4 |
| 2 | Ethylenglykoldimethacrylat | 5 |
| 3 | Diethylenglykoldimethacrylat | 20 |
| 4 | Polyethylenglykol-1000-dimethacrylat | 10 |
| 5 | Diethylenglykoldivinylether | 10 |
| 6 | Glycerin-12EO-trivinylether | 1 |
| 7 | Pentaerythrit-64EO-tetravinylether | 10 |
| 8 | Pentaerythrittetraacrylat | 1,4 |
| 9 | Pentaerythrittriallylether | 1,4 |
| 10 | Polyethylenglykol-300-divinylether | 10 |
| 11 | Polyethylenglykol-1500-divinylether | 10 |
| 12 | Polyethylenglykol-6000-divinylether | 10 |
| 13 | 1,6-Hexandioldivinylether | 1 |
| 14 | Cyclohexan-1,4-dimethanoldivinylether | 1 |
| 15 | Allylcinnamat | 1 |

Ein Vernetzer wird als in der angegebenen Menge verträglich angesehen, wenn er ein homogenes, klares Reaktionsgemisch ergibt. Die angegebenen Werte sind keine Grenzwerte, sondern geben Mengen an, bei denen noch Verträglichkeit gegeben ist.

**Bestimmung der Wasseraufnahme**

200 mg getrocknetes Gel werden in einen beschichteten Teebeutel eingeschweißt, und der Teebeutel wird für bestimmte Zeiträume in das wäßrige Medium (destilliertes Wasser oder physiologische Natriumchloridlösung) gehängt. Man läßt den Teebeutel 10 min abtropfen und bestimmt das Gewicht. Die Wasseraufnahme wird berechnet nach der Gleichung

$$\text{Wasseraufnahme in \%} = \frac{\text{nasses Gel - trockenes Gel}}{\text{trockenes Gel}} \times 100$$

Die Figuren 1 und 2 zeigen die Wasseraufnahme in deionisiertem Wasser und in physiologischer Natriumchloridlösung als Funktion der Zeit für das System Maleinsäure (MS), Natrium-4-styrolsuifonat (NaSS) (Molverhältnis 1:1) und Methylenbisacrylamid (MBAA) mit steigenden Mengen des letzteren. Die Figuren 3 und 4 zeigen die entsprechenden Ergebnisse mit einem ähnlichen System, in dem MBAA durch Polyethylenglykol-1000-dimethacrylat (PEG-1000-DMA) ersetzt wurde. Man erkennt, daß die Wasseraufnahme in physiologischer Natriumchloridlösung zumindest bei den schwach vernetzten Gelen merklich geringer ist, aber immer noch über 90 % liegt.

**Messung der Bakterienadhäsion**

Eine Probe des Gels wird eine Stunde in steriler PBS-Pufferlösung gequollen und anschließend 2 Stunden bei 37°C mit einer Suspension von Klesbiella pneumoniae geschüttelt. Locker anhaftende Bakterien werden durch fünfmaliges Waschen mit PBS-Pufferlösung entfernt. Aus den auf dem Gel dann noch haftenden Bakterien wird der Bakterieninhaltsstoff Adenosintriphosphat (ATP) in bekannter Weise extrahiert und mit einer handelsüblichen Testkombination (Boehringer Mannheim GmbH) bioluminometrisch bestimmt. Die Anzahl der gemessenen Lichtimpulse ist proportional der Bakterienadhäsion.

Die Bakterienadhäsion wurde an einem Gel aus 40 mol-% MS, 40 mol-% NaSS und 20 mol-% MBAA sowie, zum Vergleich, an einem Stoff mit ähnlich großer Oberfläche, nämlich expandiertem Polystyrol (EPS), gemessen. Die Adhäsion an dem Gel betrug nur 5 % der Adhäsion an EPS.

**Patentansprüche**

1. Hämokompatibles und bakterienabweisendes hydrophiles, quellfähiges Copolymer mit Repetiereinheiten aus mindestens einem Sulfat- und/oder Sulfonatgruppen-haltigen Monomer (A), mindestens einem Carboxyl- und/oder Carboxylatgruppen-haltigen Monomer (B) sowie mindestens einem mindestens bifunktionellen Vernetzer (C).

2. Verfahren nach Anspruch 1, dadurch gekennzeichnet, daß man Monomere A und B verwendet, die durch die allgemeinen Formeln I und II beschrieben werden:

Formel I : $(C_nH_{2n-q-x})(SO_3R^a)_x$ (Monomere A)

Formel II: $(C_nH_{2n-q-x})(COOR^b)_x$ (Monomere B)

in denen

- n jeweils unabhängig für eine ganze Zahl von 2 bis einschließlich 6;
- x jeweils unabhängig für 1 oder 2;
- q jeweils unabhängig für 0 oder 2; steht, der Rest
- $R^a$ ein Äquivalent eines Metallions, insbesondere ein Alkalimetallion und
- $R^b$ -H oder ein Äquivalent eines Metallions, insbesondere ein Alkalimetallion bedeutet.

3. Verfahren nach Anspruch 1, dadurch gekennzeichnet, daß man als Monomere A und/oder B vom Benzol abgeleitete Monomere der allgemeinen Formel

Formel III: $(C_6H_{6-b-c-d})B_bR^c{}_c(OH)_d$ (Monomere A oder B)

verwendet, worin

B jeweils unabhängig einen ein- oder zweifach ungesättigten geradkettigen oder verzweigten Rest der Formeln $(C_nH_{2n-1-q-y})$ $(SO_3R^a)_y$ oder $(C_nH_{2n-1-q-y})(COOR^b)y$ bedeutet, wobei $R^a$, $R^b$, n und q wie zuvor definiert sind und y jeweils unabhängig für 0, 1 oder 2 steht;

$R^c$ jeweils unabhängig $C_{1-4}$-Alkyl, $-NH_2$, -COOH, $-SO_3H$, $-OSO_3H$, $-OPO(OH)_2$, $-PO(OH)_2$, $-OP(OH)_2$, $-OPO(O^-)OCH_2-CH_2-N^+(CH_3)_3$, $-PO(O^-)O-CH_2-CH_2-N^+(CH_3)_3$, $-OP(O^-)OCH_2-CH_2-N^+(CH_3)_3$ oder ein Salz, insbesondere ein Alkalisalz, oder einen Ester der genannten Gruppen bedeutet;

b für 1, 2, oder 3 steht;

c für 0, 1, 2, oder 3 steht; und

d für 0, 1, 2, oder 3 steht;

mit der Maßgabe, daß $b + c + d \leq 6$, vorteilhaft $\leq 4$ ist.

4. Verfahren nach Anspruch 1, dadurch gekennzeichnet, daß man als Monomere A Sulfate der Formel IV verwendet,

Formel IV: $(C_nH_{2n-q-x})(OSO_3R^a)_x$ (Monomere A)

wobei $R^a$, n, q und x wie zuvor definiert sind.

5. Verfahren nach einem der Ansprüche 1 bis 4, dadurch gekennzeichnet, daß als mindestens bifunktionelle Vernetzer radikalisch polymerisierbare Verbindungen mit 2 bis 4 olefinischen Doppelbindungen verwendet.

6. Copolymer nach einem der Ansprüche 1 bis 5, dadurch gekennzeichnet, daß man als Sulfatgruppen- und/oder Sulfonatgruppen-haltiges Monomer A Natrium-4-styrolsulfonat, Natriumvinylsulfonat oder Natriummethallylsulfonat verwendet.

7. Copolymer nach einem der Ansprüche 1 bis 6, dadurch gekennals Carboxyl-und/oder Carboxylatgruppen-haltiges Monomer B Maleinsäure, Acrylsäure, Methacrylsäure, 4-Vinylbenzoesäure oder ein Natriumsalz dieser Säuren verwendet.

8. Copolymer nach einem der Ansprüche 1 bis 8, dadurch gekennzeichnet, daß man als Vernetzer C Methylenbisacrylamid, Ethylenglykoldimethacrylat, Diethylenglykoldimethacrylat, Polyethylenglykol-1000-dimethacrylat, Diethylenglykoldivinylether, Glycerin-12EO-trivinylether, Pentaerythrit-64EO-tetravinylether, Pentaerythrittetraacrylat, Penterythrittriallylether, Polyethylenglykol-300-divinylether, Polyethylenglykol-1500-divinylether, Polyethylenglycol-6000-divinylether, 1,6-Hexandioldivinylether, Cyclohexan-1,4-dimethanoldivinylether oder Allylcinnamat verwendet.

9. Copolymer nach einem der Ansprüche 1 bis 8, dadurch gekennzeichnet, das das molare Verhältnis der Carboxyl-und/oder Carboxylatgruppen zu den Sulfatgruppen und/oder Sulfonatgruppen 0,2 bis 10 beträgt.

10. Verfahren zur Herstellung der Copolymeren nach einem der Ansprüche 1 bis 9, dadurch gekennzeichnet daß man die Monomeren A und B, den Vernetzer C und gegebenenfalls weitere Monomere D in wäßrigem Medium radikalisch initiiert polymerisiert.

11. Verfahren nach Anspruch 10, dadurch gekennzeichnet, daß man die Polymerisation bei 40 bis 100°C durchführt und eine Peroxyverbindung als Initiator benutzt.

12. Verwendung eines Copolymers nach einem der Ansprüche 1 bis 9 für hygienische oder medizinische Zwecke.

13. Verwendung nach Anspruch 12, dadurch gekennzeichnet, daß das Copolymer für Wundverbände verwendet wird.

14. Verwendung nach Anspruch 12, dadurch gekennzeichnet, daß das Copolymer als Polymersubstrat für Wirkstoffdepots verwendet wird.

15. Verwendung eines Copolymers nach einem der Ansprüche 1 bis 9 in Form des Hydrogels als Wasserreservoir für Pflanzen oder Schnittblumen.

FIGUR 1

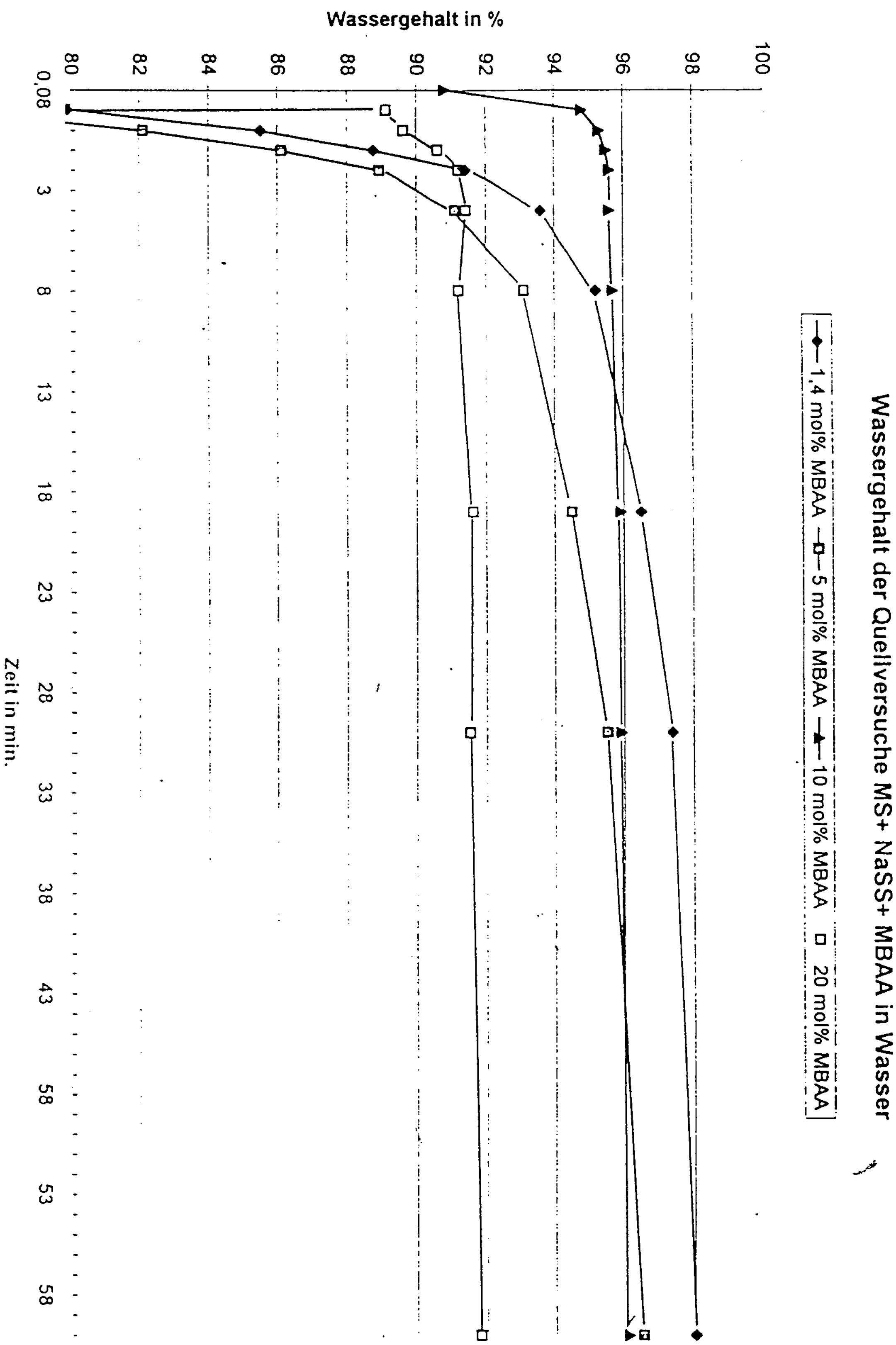

Wassergehalt der Quellversuche MS+ NaSS+ MBAA in Wasser
1,4 mol% MBAA
5 mol% MBAA
10 mol% MBAA
20 mol% MBAA
Wassergehalt in %
100
98
96
94
92
90
88
86
84
82
80
0,08
3
8
13
18
23
28
33
38
43
58
53
58
Zeit in min.

FIGUR 2

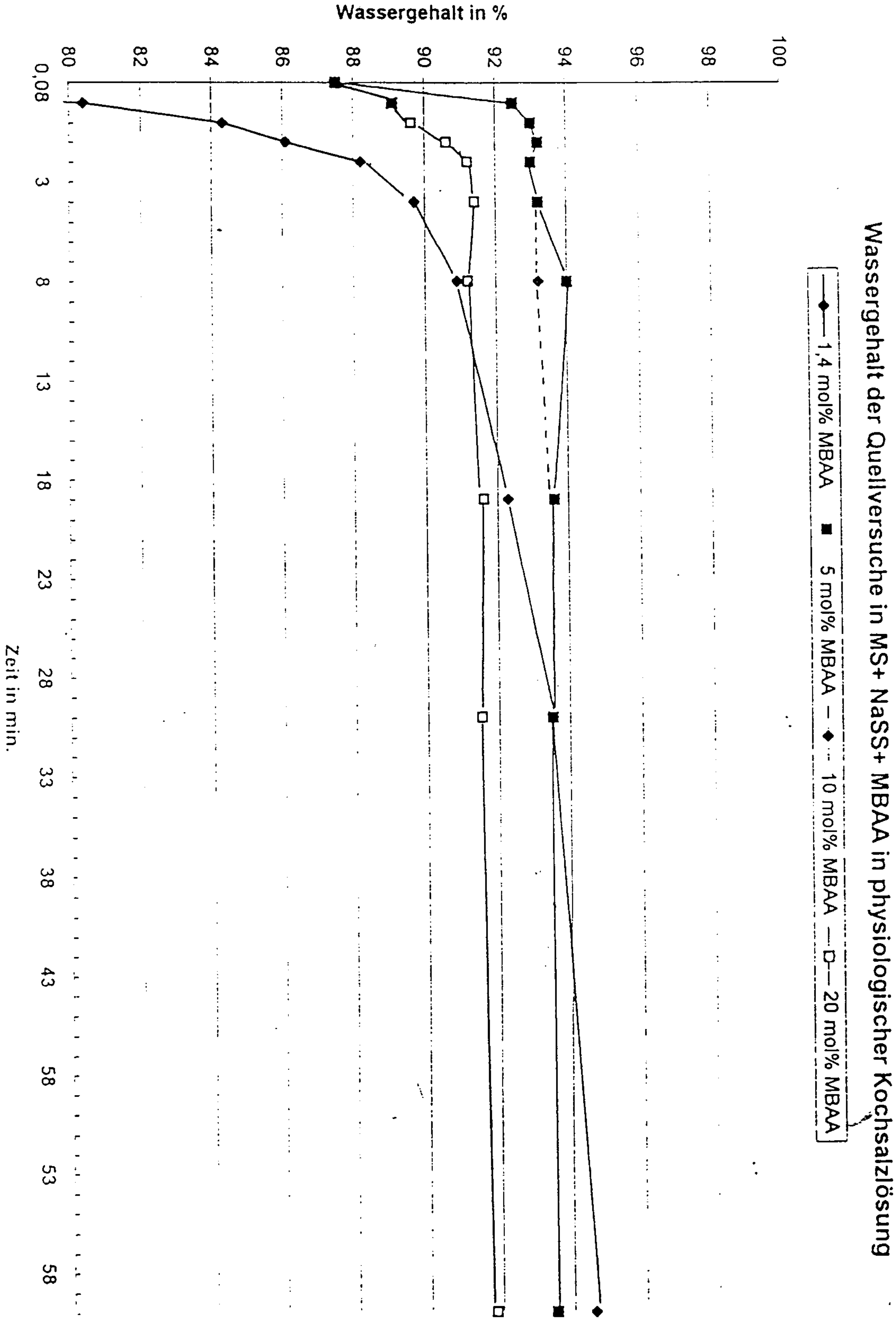
Wassergehalt der Quellversuche in MS+ NaSS+ MBAA in physiologischer Kochsalzlösung
1,4 mol% MBAA
5 mol% MBAA
10 mol% MBAA
20 mol% MBAA
Wassergehalt in %
80
82
84
86
88
90
92
94
96
98
100
0,08
3
8
13
18
23
28
33
38
43
58
53
58
Zeit in min.

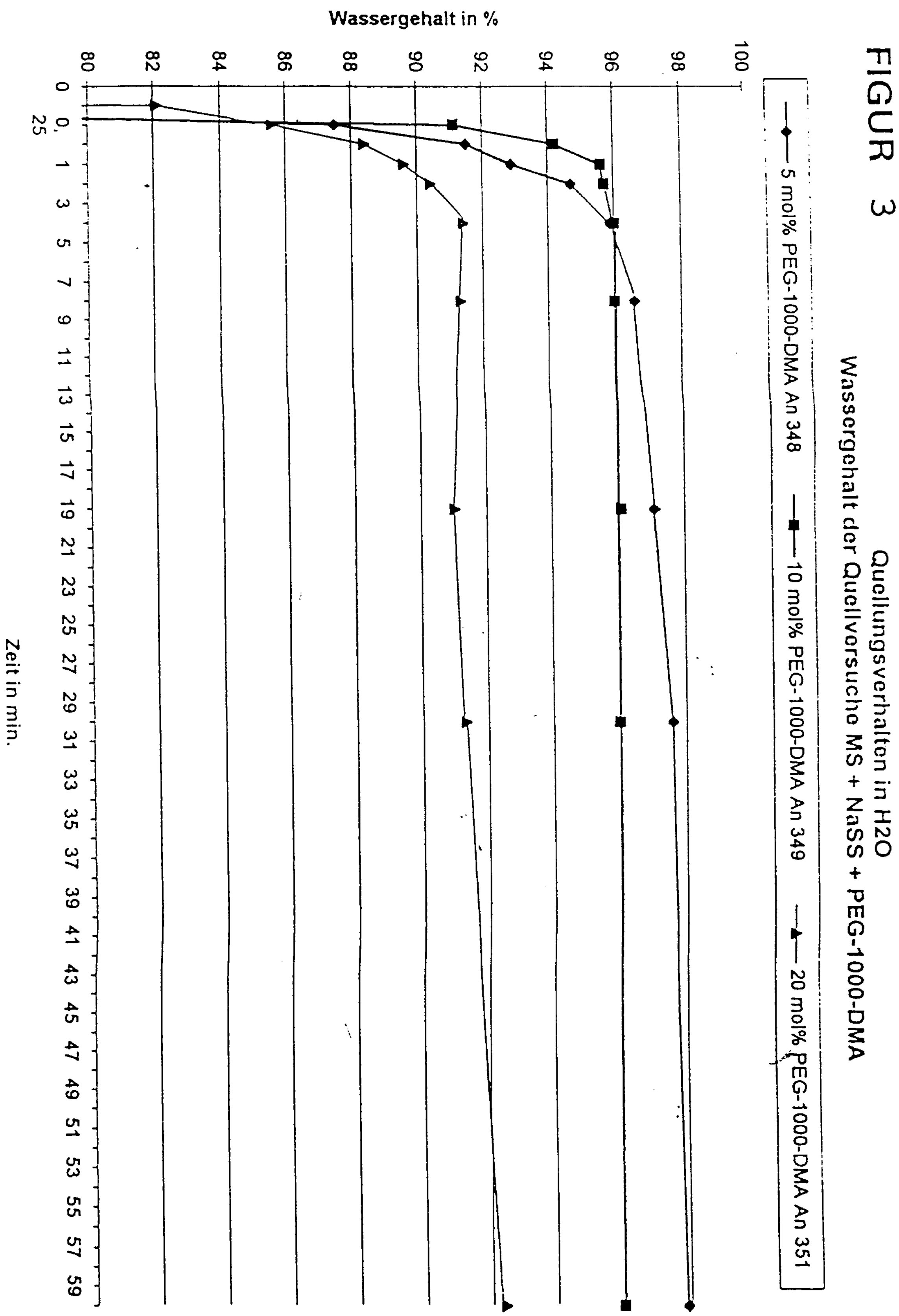
FIGUR 3
Quellungsverhalten in H2O
Wassergehalt der Quellversuche MS + NaSS + PEG-1000-DMA
5 mol% PEG-1000-DMA An 348
10 mol% PEG-1000-DMA An 349
20 mol% PEG-1000-DMA An 351
Wassergehalt in %
100
98
96
94
92
90
88
86
84
82
80
Zeit in min.
0
0,25
1
3
5
7
9
11
13
15
17
19
21
23
25
27
29
31
33
35
37
39
41
43
45
47
49
51
53
55
57
59

FIGUR 4

Quellungsverhalten in physiologischer Kochsalzlösung
Wassergehalt der Quellversuche MS + NaSS + PEG-1000-DMA